# EUROPÄISCHE PATENTSCHRIFT

(11) **EP 2 635 471 B1**
(45) Veröffentlichungstag und Bekanntmachung des Hinweises auf die Patenterteilung: **25.03.2015**
(21) Anmeldenummer: 11752540.2
(22) Anmeldetag: 05.09.2011
(51) Int. Cl.: B60T 7/04, B60T 13/66

(54) **BREMSKRAFTVERSTÄRKER UND VERFAHREN ZUM BETRIEB EINES BREMSKRAFTVERSTÄRKERS**
BRAKE BOOSTER AND METHOD FOR OPERATING A BRAKE BOOSTER
SERVOFREIN ET SON PROCÉDÉ DE FONCTIONNEMENT

(30) Priorität: 02.11.2010 DE 102010043202
(43) Veröffentlichungstag der Anmeldung: 11.09.2013
(73) Patentinhaber: Robert Bosch GmbH, 70442 Stuttgart (DE)
(72) Erfinder: MAHNKOPF, Dirk, 71634 Eglosheim (DE)
(86) Internationale Anmeldenummer: PCT/EP2011/065246
(87) Internationale Veröffentlichungsnummer: WO 2012/059259

(56) Entgegenhaltungen:
- WO-A1-2010/069832
- WO-A2-2009/083216
- DE-A1- 19 736 997

## Beschreibung

Die Erfindung betrifft einen Bremskraftverstärker und ein Verfahren zum Betrieb eines Bremskraftverstärkers.

### Stand der Technik

Bei Fahrzeugen mit herkömmlichen Scheibenbremsen treten während eines ungebremsten Betriebszustandes, also bei unbetätigtem Bremspedal, häufig Energieverluste in Form eines Restbremsmomentes auf, da die Bremsbeläge an der Bremsscheibe schleifen. Dieses Schleifen kann z.B. durch Scheibenschlag und/oder durch in vielen Fällen nicht korrekte Belagrückstellung und Lüftspieleinhaltung hervorgerufen werden.

Zur Energieeinsparung wurden daher Scheibenbremsen entwickelt, bei welchen sich die Bremse im ungebremsten Zustand in einer sogenannten "Zero-Drag"-Position befindet, so dass hierbei keinerlei Reibung zwischen den Bremsbelägen und der Bremsscheibe auftritt. Ein entsprechend ausgestalteter Bremssattel wird häufig auch als "zero-dragcaliper" bezeichnet.

Nachteilig an derartigen Bremssystemen ist es aber, dass sich dabei oftmals die Bremsbeläge nach dem Lösen des Bremspedals sehr weit von der Bremsscheibe zurückziehen, so dass sich bei Betätigung des Bremsbetätigungselements ein im Vergleich zu herkömmlichen Bremssystemen erhöhter Leer- oder Todweg ergibt. Ein derartiger zusätzlicher Leer- oder Todweg ist aber unerwünscht und sollte daher vermieden oder ausgeglichen werden. Dabei sei darauf hingewiesen, dass sich derartige erhöhte Leer- oder Todwege systembedingt auch unabhängig von "zero-drag-calipern" ergeben können.

Bisher war die Kompensation derartiger unerwünschter zusätzlicher Leer- oder Todwege nur durch den Einsatz sogenannter reiner Fremdkraftbremsanlagen realisierbar, bei denen die zur Erzeugung der Bremskraft benötigte Energie von einer oder mehreren Energieversorgungseinrichtungen, jedoch nicht von der physischen Kraft des Fahrzeugführers, erzeugt wird.

Die Offenlegungsschrift WO 2010/069832 A1 betrifft ein Verfahren zur Steuerung einer hydraulischen Fahrzeugbremsanlage mit einem elektromechanischen Bremskraftverstärker. Die Erfindung schlägt vor, den Bremskraftverstärker und mit ihm einen Hauptbremszylinder der Fahrzeugbremsanlage auf einen möglichen Bremswunsch hin zu betätigen und ein Lüftspiel in Radbremsen zu verkleinern, vorzugsweise zu eliminieren. Eine anschließende Bremsbetätigung erfolgt dadurch schneller. Der mögliche Bremswunsch kann beispielsweise eine Rücknahme oder eine schnelle Rücknahme eines Gaspedals, die Annäherung eines Fuß eines Fahrzeugführers an ein Bremspedal oder die Unterschreitung eines Mindestabstands von einem vorausfahrenden Fahrzeug oder einem Hindernis sein.

### Offenbarung der Erfindung

Ein erfindungsgemäßer Bremskraftverstärker umfasst ein durch einen Fahrer betätigbares Eingangselement, einen Aktuator zum Erzeugen einer Unterstützungskraft, ein Ausgangselement, welches durch das Eingangselement und/oder den Aktuator mit einer Eingangskraft bzw. der Unterstützungskraft beaufschlagbar ist und durch welches ein Kolben eines Hauptbremszylinders mit einer Betätigungskraft beaufschlagbar ist, und eine Kraftübertragungseinheit mit elastischen Eigenschaften, welche zwischen dem Eingangselement und dem Aktuator einerseits und dem Ausgangselement andererseits angeordnet ist und die Eingangskraft und/oder die Unterstützungskraft auf das Ausgangselement überträgt. Außerdem ist eine Vorspanneinheit vorgesehen, welche derart auf die Kraftübertragungseinheit einwirkt, dass sie die Kraftübertragungseinheit im Ruhezustand des Bremskraftverstärkers mit einem Kräftepaar beaufschlagt.

Bei einem erfindungsgemäßen Verfahren zum Betrieb eines erfindungsgemäßen Bremskraftverstärkers wird im Vorfeld eines zu erwartenden Bremswunsches oder unmittelbar nach Erkennen eines Bremswunsches in einem Zeitbereich vor oder unmittelbar nach Erkennen einer Betätigung des Eingangselements eine Unterstützungskraft durch den Aktuator erzeugt wird.

### Vorteile der Erfindung

Die Erfindung basiert auf der Grundidee, einen Bremskraftverstärker derart auszugestalten, dass unerwünschte Leer- oder Todwege des Bremssystems ohne spürbaren Einfluss auf die Pedalcharakteristik, z.B. in Form einer Verschiebung des Bremsbetätigungselements, kompensiert werden. Dies wird erfindungsgemäß dadurch erreicht, dass eine Vorspanneinheit derart auf die Kraftübertragungseinheit eines Bremskraftverstärkers einwirkt, dass sie die Kraftübertragungseinheit im Ruhezustand des Bremskraftverstärkers mit einem Kräftepaar beaufschlagt. Wird nun im Vorfeld eines zu erwartenden Bremswunsches oder unmittelbar nach Erkennen eines Bremswunsches in einem Zeitbereich vor oder unmittelbar nach Erkennen einer Betätigung des Eingangselements eine Unterstützungskraft durch den Aktuator erzeugt, so kann durch geeignete Auslegung der Vorspanneinheit und damit des Kräftepaares sowie der im Vorfeld eines zu erwartenden Bremswunsches oder unmittelbar nach Erkennen eines Bremswunsches erzeugten Unterstützungskraft ein vordefinierter Weg am Ausgang des Bremskraftverstärkers und somit an dem Kolben des Hauptbremszylinders überwunden werden, ohne dass ein entsprechender Weg am Eingang des Bremskraftverstärkers und damit an dem Eingangselement vorliegen muss. Der Leer- oder Todweg kann damit kompensiert werden, ohne dass der Fahrer dies, z.B. durch eine entsprechende Verschiebung des Eingangselements, bemerkt.

Im Vergleich zur aufwendigen und kostenintensiven Realisierung eines reinen Fremdkraftbremssystems stellt die erfindungsgemäße Ausgestaltung eines Bremskraftverstärkers eine besonders einfache und damit kostengünstige Variante zur Kompensation von Leer- oder Todwegen in Bremssystemen dar. Der erfindungsgemäße Bremskraftverstärker und das erfindungsgemäße Betriebsverfahren zeichnen sich darüber hinaus dadurch aus, dass sowohl Todwege im Bereich des Bremssattels als auch Todwege im Bereich des Hauptbremszylinders kompensiert werden können. Außerdem erfolgt die Kompensation für den Fahrer unmerklich, so dass auch ein hoher Komfort sicher gestellt ist.

Eine weitere vorteilhafte Anwendung des erfindungsgemäßen Bremskraftverstärkers oder des erfindungsgemäßen Betriebsverfahrens ergibt sich beim Einsatz in einem Hybrid-oder Elektrofahrzeug. Hier kann der Fremdkraftmodus der Bremskraftverstärkers beim Verblenden eines Generatormomentes genutzt werden. Im Falle einer Bremsung wird zunächst der Druck im Rahmen der Todwegkompensation aufgebaut. Falls nun ein generatorisches Moment hinzukommt, kann das hydraulische Bremsmoment entsprechend reduziert werden, so dass das gesamte Bremsmoment konstant bleibt. Hierbei strömt Bremsflüssigkeit aus dem Bremssystem in den Hauptbrenmszylinder zurück, wodurch sich die Kraftübertragungseinheit in Richtung des Bremsbetätigungselements verschiebt. Bei einem herkömmlichen Bremssystem ist der Luftspalt entsprechend groß auszulegen, so dass hierbei kein Kontakt zwischen der Kraftübertragungseinheit und dem Eingangselement entsteht. Mit einem erfindungsgemäßen Bremskraftverstärker bzw. bei Verwendung des erfindungsgemäßen Betriebsverfahrens muss der Luftspalt hingegen nicht vergrößert werden, wodurch unter anderem im Falle eines Verstärkerausfalles kein erhöhter Leerweg vorliegt. Da während der Verblendung keine direkte Verbindung zwischen dem Bremssystem und dem Bremsbetätigungselement besteht, kommt es zu keiner Rückwirkung aus das Bremsbetätigungselement, das heißt die Pedalcharakteristik bleibt konstant.

Die Erfindung kann unabhängig von dem Typ des Bremskraftverstärkers eingesetzt werden, das heißt der Aktuator des Bremskraftverstärkers kann als pneumatischer oder hydraulischer oder elektrohydraulischer oder elektromechanischer oder elektrothermischer Aktuator ausgestaltet sein.

Da die Kraftübertragungseinheit und insbesondere deren Steifigkeit im Vergleich zu herkömmlichen Bremskraftverstärkern nicht oder nur geringfügig verändert wird, ergibt sich auch im Falle eines Ausfalles des Bremskraftverstärkers kein verändertes Verhalten. Insbesondere tritt keine nennenswerte Erhöhung der notwendigen Betätigungskraft des Fahrers zur Erzielung einer gewünschten Verzögerung auf.

Gemäß einer Ausführungsform der Erfindung ist die Kraftübertragungseinheit, welche als eine elastisch deformierbare Reaktionsscheibe oder eine elastische Federkonstruktion ausgebildet sein kann, derart ausgestaltet, dass eine Abweichung des Verhältnisses der Unterstützungskraft zur Eingangskraft von einem vorgegebenen Verhältnis zu einer Auslenkung der Kraftübertragungseinheit führt.

Gemäß einer weiteren Ausführungsform der Erfindung weist die Vorspanneinheit eine Krafterzeugungseinheit auf, welche die Kraftübertragungseinheit im Ruhezustand aktiv mit einer ersten Kraft des Kräftepaares beaufschlagt.

Eine konstruktiv besonders einfache und damit kostensparende Ausführungsform der Erfindung ergibt sich, wenn die Krafterzeugungseinheit als ein im Ruhezustand des Bremskraftverstärkers vorgespanntes Federelement ausgebildet ist, welches sich einseitig an der Kraftübertragungseinheit abstützt. Dabei kann als Federelement beispielsweise eine Rückholfeder des Bremskraftverstärkers oder eine Feder des Hauptbremszylinders dienen.

Eine weitere Reduzierung des Konstruktions- und Kostenaufwandes kann dadurch erreicht werden, dass die zur Erzeugung des Kräftepaares erforderliche zweite Kraft in Form einer Reaktionskraft realisiert wird. Dies kann dadurch erreicht werden, dass die Vorspanneinheit eine Reaktionseinheit umfasst, welche eine Reaktionskraft zu der ersten Kraft erzeugt, welche zusammen mit der ersten Kraft dann das Kräftepaar bildet.

In besonders einfacher Art und Weise kann die Reaktionskraft dadurch erzeugt werden, dass die Reaktionseinheit einen Anschlag umfasst, an welchem sich die Kraftübertragungseinheit unmittelbar oder mittelbar abstützt.

Gemäß einer Ausführungsform der Erfindung weist das Eingangselement ein durch den Fahrer betätigbares erstes Teilelement zum Erzeugen der Eingangskraft und ein davon getrenntes zweites Teilelement zur Übertragung der Eingangskraft auf die Kraftübertragungseinheit auf. Der Anschlag ist dabei derart angeordnet, dass sich in Ruhelage des Bremskraftverstärkers das zweite Teilelement des Eingangselements mit seiner der Kraftübertragungseinheit abgewandten Seite daran abstützt. Diese Ausführungsform hat den Vorteil, dass der Anschlag nicht unmittelbar an der Kraftübertragungseinheit, sondern in einem Bereich zwischen der Kraftübertragungseinheit und dem Eingangselement angeordnet sein kann, was die konstruktive Flexibilität deutlich erhöht. Dadurch kann auf konkrete Rahmenbedingungen des Bremssystems oder umliegender Fahrzeugkomponenten, z.B. hinsichtlich Bauraums, besser Rücksicht genommen werden.

Dieser Vorteil kann alternativ auch dadurch erreicht werden, dass das Eingangselement beweglich in einem Rohr angeordnet ist, welches in Ruhelage des Bremskraftverstärkers an der Kraftübertragungseinheit anliegt und sich mit seiner der Kraftübertragungseinheit abgewandten Seite an dem Anschlag abstützt.

Zur Realisierung einer sogenannten "Springer-Funktion" kann zwischen dem Eingangselement und der Kraftübertragungseinheit oder zwischen dem ersten und zweiten Teilelement des Eingangselements ein einstellbarer Luftspalt vorgesehen sein. Dieser Luftspalt bewirkt, dass der Fahrer bei Betätigung des Eingangselements zunächst nicht gegen die Kraftübertragungseinheit drücken muss, sondern es mit geringen Kräften bewegen kann. Die Steuerung oder Regelung der Aktuatorkraft erfolgt in diesem Bereich wegabhängig in Abhängigkeit vom Weg des Eingangselements bei nahezu konstanter Eingangskraft. Die Betätigungskraft wird in diesem Bereich vorwiegend vom Aktuator aufgebracht. Die Größe des Luftspaltes definiert dabei die Größe des sogenannten Jumpins, das heißt diejenige Kraft bzw. denjenigen Druck, bei welcher/welchem das Bremssystem von einem Fremdkraftmodus in einen Hilfskraftmodus übergeht.

Eine zusätzliche Kompensation von unerwünschten Leer- oder Todwegen des Bremssystems lässt sich dadurch realisieren, dass der Luftspalt im Ruhezustand kleiner oder größer eingestellt ist als ein gewünschter Luftspalt zu Beginn eines Bremsvorganges. Wird im Vorfeld eines zu erwartenden Bremswunsches oder unmittelbar nach Erkennen eines Bremswunsches in einem Zeitbereich vor oder unmittelbar nach Erkennen einer Betätigung des Eingangselements eine Unterstützungskraft durch den Aktuator erzeugt, so wird ein vordefinierter Weg am Ausgang des Bremskraftverstärkers und damit am Kolben des Hauptbremszylinders überwunden. Da in diesem Zeitbereich aber noch keine Verbindung zwischen dem Eingangselement und der Kraftübertragungseinheit besteht, hat dies keine Auswirkungen auf das Betätigungselement und ist daher für den Fahrer nicht zu bemerken. Der überwundene Weg am Ausgang des Bremskraftverstärkers und die damit verbundenen Änderungen an der Kraftübertragungseinheit beeinflussen ab einer auslegungsbedingten Unterstützungskraft direkt den Luftspalt zwischen dem Eingangselement und der Kraftübertragungseinheit oder zwischen dem ersten und zweiten Teilelement des Eingangselements. Ohne weitere Maßnahmen würde dadurch der zur Realisierung einer gewünschten Springer-Funktion erforderliche Luftspalt in Abhängigkeit von den durch die Unterstützungskraft bewirkten Deformationen der Kraftübertragungseinheit und des Hauptbremszylinders zu groß oder zu klein werden. Dies kann dadurch ausgeglichen werden, dass der der Luftspalt im Ruhezustand kleiner bzw. größer eingestellt ist als ein gewünschter Luftspalt zu Beginn eines Bremsvorganges.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: ein Ersatzmodell einer ersten Ausführungsform eines erfindungsgemäßen Bremskraftverstärkers,
- Fig. 2: ein Ersatzmodell einer zweiten Ausführungsform eines erfindungsgemäßen Bremskraftverstärkers,
- Fig. 3: ein Ersatzmodell einer dritten Ausführungsform eines erfindungsgemäßen Bremskraftverstärkers und
- Fig. 4: eine schematische Darstellung einer Ausführungsvariante eines Bremskraftverstärkers gemäß Fig. 3.

### Ausführungsformen der Erfindung

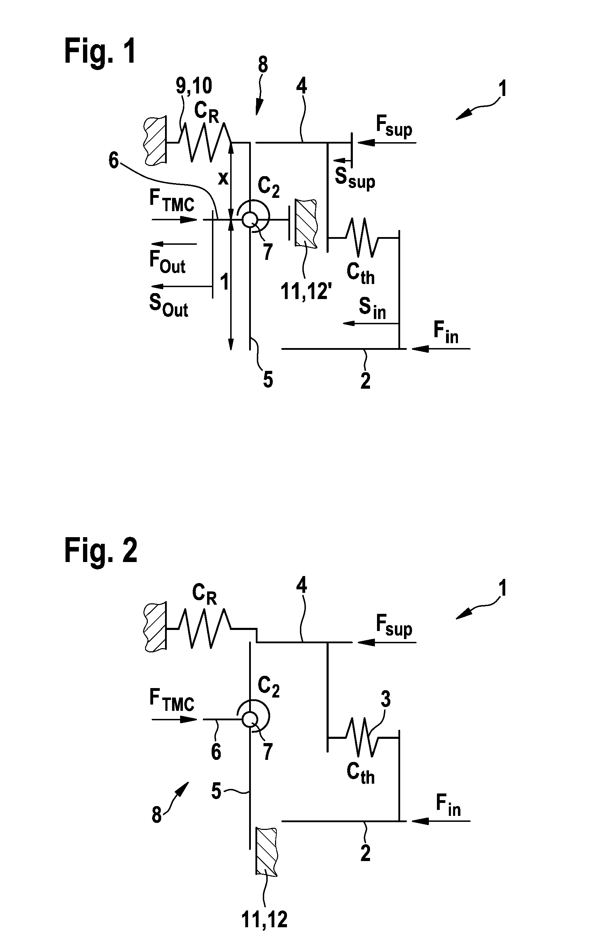

Die Figuren 1 bis 3 zeigen anhand von Ersatzmodellen verschiedene Ausführungsformen eines erfindungsgemäßen Bremskraftverstärkers 1. Ein Eingangselement 2 ist mechanisch mit einem nicht dargestellten Bremsbetätigungselement, welches z.B. als Bremspedal oder Bremshebel ausgeführt sein kann, gekoppelt und auf diese Weise durch einen Fahrer betätigbar. Wirkt eine Eingangskraft Fᵢₙ, die größer ist als ein Kraftschwellwert, auf das Eingangselement 2, welches z.B. in Form eines Eingangskolbens ausgestaltet sein kann, so verschiebt sich dieses um einen Weg sᵢₙ. Die Eingangskraft Fᵢₙ entspricht dabei in der Regel einer Betätigungskraft des Fahrers. Der Kraftschwellwert ist in den Figuren 1 bis 3 in Form eines Federelementes 3 mit einer Steifigkeit cₜₕ und einer Federvorspannung Fₜₕ wiedergegeben. Ein nicht dargestellter Aktuator kann eine Unterstützungskraft Fₛᵤₚ auf einen Verstärkerkörper 4 aufbringen, was zu einem Verstellweg sₛᵤₚ des Verstärkerkörpers 4 führt. Der Aktuator kann dabei in beliebiger Form, z.B. als pneumatischer oder hydraulischer oder elektrohydraulischer oder elektromechanischer oder elektrothermischer Aktuator ausgeführt sein. Der Verstärkerkörper 4 kann z.B. als Unterstützungskolben ausgestaltet sein. Über eine Kraftübertragungseinheit 5, welche elastische Eigenschaften aufweist, werden die Eingangskraft Fᵢₙ und die Unterstützungskraft Fₛᵤₚ zu einer Ausgangskraft Fₒᵤₜ zusammengeführt und auf ein Ausgangselement 6 übertragen. Das Ausgangselement 6 verschiebt sich dabei um einen Weg sₒᵤₜ. Das Ausgangselement 6 ist mechanisch mit einem nicht dargestellten Kolben eines Hauptbremszylinders gekoppelt, welcher durch die Kraftübertragungseinheit mit einer (Brems-)Betätigungskraft beaufschlagbar ist. Die Kraftübertragungseinheit 5 ist derart ausgestaltet, dass eine Abweichung des Verhältnisses der Unterstützungskraft Fₛᵤₚ zur Eingangskraft Fᵢₙ von einem vorgegebenen Verhältnis zu einer Auslenkung oder Deformation der Kraftübertragungseinheit 5 führt. Die Kraftübertragungseinheit 5 ist somit als Kraftwaage ausgeführt, welche durch eine elastisch deformierbare Reaktionsscheibe oder eine elastische Federkonstruktion realisiert sein kann. Von Seiten des Ausgangselements 6 wirkt auf die Kraftübertragungseinheit eine Kraft F_{TMC}, welche sich aus der Vorspannung der Federn im Hauptbremszylinder sowie ggf. durch einen Vordruck ergibt. Aus Gründen der Übersichtlichkeit sind einige der genannten Größen lediglich in Figur 1 dargestellt.

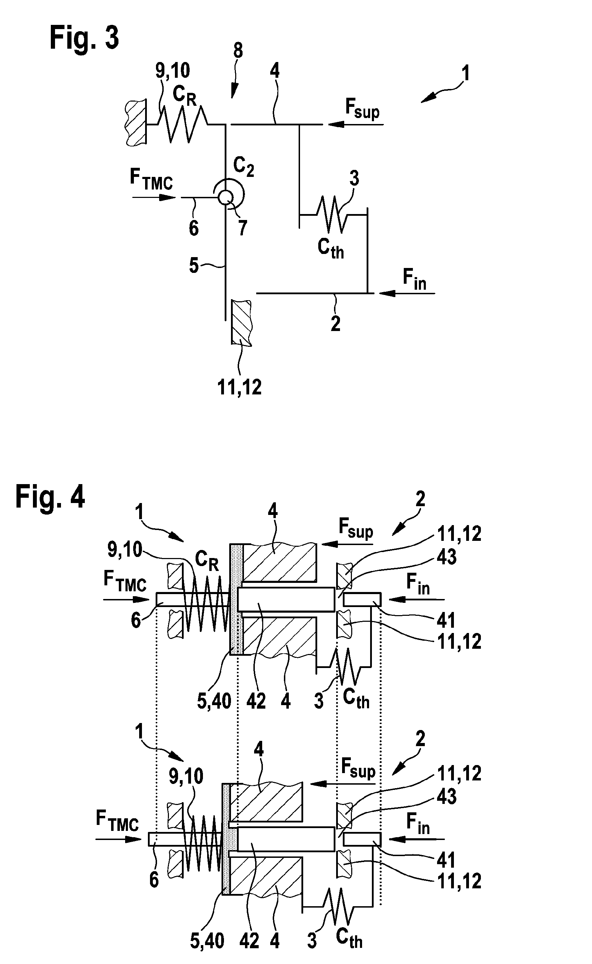

Die Ersatzmodelle des Bremskraftverstärkers 1 beinhalten des Weiteren Größen, welche die Kraftübertragungseinheit 5 charakterisieren. So besitzt die Kraftübertragungseinheit 5 eine Steifigkeit c₂. Außerdem ist in Figur 1 ein Anlagepunkt 7 des Ausgangselements 6 an der Kraftübertragungseinheit 5 zu erkennen. Ein Quotient X gibt das Verhältnis der Strecke x zwischen dem Anlagepunkt 7 und einem Angriffspunkt des Verstärkerkörpers 4 sowie der Strecke zwischen dem Anlagepunkt 7 und einem Angriffspunkt des Eingangselements 4 (hier gekennzeichnet mit der Länge eins) an. Die Hebellängen, also die Längen "x" und "1" entsprechen dabei z.B. Kontaktflächen zwischen dem Eingangselement 2 bzw. dem Verstärkerkörper 4 und einer Reaktionsscheibe. Lediglich aus Gründen der Übersichtlichkeit sind der Anlagepunkt 7 sowie die Hebellängen in den Figuren 2 und 3 nicht dargestellt.

Insbesondere beim Einsatz von sogenannten "zero drag calipern" oder auch systembedingt kann es im Bereich des Bremssystems zu unerwünschten Leer- oder Todwegen kommen. Um diese zu kompensieren weist ein erfindungsgemäßer Bremskraftverstärker 1 eine Vorspanneinheit 8 auf, welche derart auf die Kraftübertragungseinheit 5 einwirkt, dass sie die Kraftübertragungseinheit 5 im Ruhezustand des Bremskraftverstärkers 1, welcher in den Figuren 1 bis 3 dargestellt ist, mit einem Kräftepaar beaufschlagt.

Die Vorspanneinheit 8 weist dabei eine Krafterzeugungseinheit 9 auf, welche die Kraftübertragungseinheit 5 im Ruhezustand aktiv mit einer ersten Kraft des Kräftepaares beaufschlagt. Bei den Ausführungsformen gemäß den Figuren 1 bis 3 wird die Krafterzeugungseinheit 9 durch ein Federelement gebildet. Bei den Ausführungsformen gemäß den Figuren 1 und 3 dient dabei eine vorgespannte Rückholfeder 10 des Bremskraftverstärkers 1 mit einer Steifigkeit c_{R} als Krafterzeugungseinheit 9. Bei der Ausführungsform gemäß Figur 2 dient eine nicht dargestellte vorgespannte Feder des Hauptbremszylinders als Krafterzeugungseinheit 9. Alternativ dazu kann die erste Kraft, mit welcher die Kraftübertragungseinheit 5 im Ruhezustand aktiv beaufschlagt werden auch durch eine beliebige andere Krafterzeugungseinheit 9, wie z.B. einen Elektromotor, erzeugt werden.

Die Vorspanneinheit 7 umfasst außerdem eine Reaktionseinheit 11, welche eine Reaktionskraft zu der ersten Kraft erzeugt. Die Reaktionskraft bildet dann zusammen mit der ersten Kraft das Kräftepaar. Gemäß den Ausführungsformen gemäß den Figuren 1 bis 3 umfasst die Reaktionseinheit 11 jeweils einen Anschlag 12' (Fig. 1) bzw. 12 (Fig. 2 und 3), an welchem sich die Kraftübertragungseinheit 4 unmittelbar oder mittelbar abstützt und mit dessen Hilfe eine Reaktionskraft auf die erste aktive Kraft erzeugt wird.

Alternativ zu den dargestellten Ausführungsformen mit einer Reaktionseinheit 11 können auch beide Kräfte des Kräftepaares aktiv erzeugt werden. So ist es beispielsweise denkbar die Reaktionseinheit 11 durch einen Elektromotor zu ersetzen, welcher die Kraftübertragungseinheit 5 aktiv mit einer Gegenkraft zu der ersten Kraft beaufschlagt.

Die Funktionsweise eines erfindungsgemäßen Bremskraftverstärkers 1 soll im Folgenden beispielhaft anhand von Figur 4 erläutert werden, welche schematisch und stark vereinfacht eine konkrete Ausgestaltung eines Bremskraftverstärkers gemäß dem Ersatzschaltbild nach Figur 3 zeigt.

Im oberen Teil von Figur 4 ist die Ruhelage des Bremssystems und damit des Bremskraftverstärkers 1 gezeigt. Die Rückholfeder 10 des Bremskraftverstärkers 1, welche in diesem Fall als Krafterzeugungseinheit 9 dient, stützt sich über die als Reaktionsscheibe 40 ausgestaltete Kraftübertragungseinheit 5 an dem Eingangselement 2 ab. Das Eingangselement 2 ist dabei zweigeteilt und weist ein durch den Fahrer betätigbares erstes Teilelement 41 zum Erzeugen der Eingangskraft Fᵢₙ und ein davon getrenntes zweites Teilelement 42 zur Übertragung der Eingangskraft Fᵢₙ auf das die Reaktionsscheibe 40 auf. Das zweite Teilelement 42 stützt sich auf seiner der Reaktionsscheibe 40 abgewandten Seite an dem Anschlag 12 ab, welcher bei dieser Ausführungsform als Teil der Reaktionseinheit 11 dient. Die Reaktionsscheibe 40 wird damit einerseits über die vorgespannte Rückholfeder 10 aktiv mit einer ersten Kraft beaufschlagt. Diese erste Kraft führt über das zweite Teilelement 42 und den Anschlag 12 zu einer in entgegengesetzter Richtung wirkenden Reaktionskraft, welche ebenfalls auf die Reaktionsscheibe 40 einwirkt. Die Reaktionsscheibe 40 wird auf diese Weise in der Ruhelage mit einem Kräftepaar beaufschlagt, welches zur dargestellten Deformation der Reaktionsscheibe 40 führt.

Bei der dargestellten Ausführungsform ist zwischen dem ersten Teilelement 41 und dem zweiten Teilelement 42 des Eingangselements 2 ein Luftspalt 43 vorgesehen, welcher der Realisierung einer "Springer"-Funktion dient und einen gewünschten Leerweg darstellt, der erst überwunden werden muss, bevor das Eingangselement 2 die Reaktionsscheibe 40 mit der Eingangskraft Fᵢₙ direkt beaufschlagt.

Wird im Vorfeld eines zu erwartenden Bremswunsches oder unmittelbar nach Erkennen eines Bremswunsches in einem Zeitbereich vor oder unmittelbar nach Erkennen einer Betätigung des Eingangselements 2 eine Unterstützungskraft Fₛᵤₚ durch den nicht dargestellten Aktuator erzeugt, wird zum einen das Ausgangselement 6 in Richtung des Hauptbremszylinders verschoben. Zum anderen wird auch die Reaktionsscheibe 40, wie im unteren Teil der Figur 4 dargestellt, deformiert. Dies führt dazu, dass zwar ein Ausgangsweg sₒᵤₜ des Ausgangselements 6 überwunden wird, die beiden Teilelemente 41 und 42 des Eingangselements 2 aber exakt in ihrer Position verbleiben bis eine Kontaktkraft zwischen dem Eingangselement 2 und der Reaktionsscheibe 40 (bei loser Ankopplung des zweiten Teilelements 42 an die Reaktionsscheibe 40) oder dem Eingangselement 2 und dem Anschlag 12 (bei fester Ankopplung des zweiten Teilelements 42 an die Reaktionsscheibe 40) gleich "0" ist. Wird die Unterstützungskraft Fₛᵤₚ weiter erhöht, so vergrößert sich bei fester Ankopplung des zweiten Teilelements 42 an die Reaktionsscheibe 40 der Luftspalt 43 zwischen dem ersten Teilelement 41 und dem zweiten Teilelement 42 des Eingangselements 2. Bei loser Ankopplung des zweiten Teilelements 42 des Eingangselements 2 an die Reaktionsscheibe 40 ergibt sich bei weiterer Erhöhung der Unterstützungskraft Fₛᵤₚ ein zusätzlicher Luftspalt zwischen der Reaktionsscheibe 40 und dem zweiten Teilelement 42 des Eingangselements 2 und/oder eine Vergrößerung des Luftspalts 43. Sowohl die Vergrößerung des Luftspalts 43 als auch die Ausbildung eines zusätzlichen Luftspalts zwischen der Reaktionsscheibe und dem zweiten Teilelement 42 des Eingangselements 2 würden aber ohne weitere Maßnahmen dazu führen, dass der Gesamtluftspalt zur Realisierung der gewünschten "Springer"-Funktion zu groß werden würde. Dieser Effekt kann dadurch kompensiert werden, dass der Luftspalt 43 im Ruhezustand, welcher im Rahmen der Fertigung des Bremskraftverstärkers 1 eingestellt wird, kleiner ist als ein gewünschter Luftspalt zu Beginn eines Bremsvorganges. In Abhängigkeit von dem Verhältnis der Verformungseigenschaften (Steifigkeit) der Kraftübertragungseinheit 5 und des Hauptbremszylinders, auf dessen Kolben das Ausgangselement 6 wirkt, in Verbindung mit dem Bremssystem kann es bei einer weiteren Erhöhung der Unterstützungskraft Fₛᵤₚ auch zu einer Verringerung des ursprünglich eingestellten Luftspalts 43 kommen. In diesem Fall ist zur Kompensation dieses Effektes der Luftspalt 43 im Ruhezustand entsprechend größer einzustellen als ein gewünschter Luftspalt zu Beginn eines Bremsvorganges

Der Bremskraftverstärker 1 ist somit in der Lage, im Vorfeld eines zu erwartenden Bremswunsches oder unmittelbar nach Erkennen eines Bremswunsches einen Ausgangsweg sₒᵤₜ ohne jegliche Rückwirkung auf das erste Teilelement 41 des Eingangselements 2 und damit unbemerkt für einen Fahrer zu überwinden. Dieses kann ausgenutzt werden, um unerwünschte Tod- oder Leerwege im Bereich des Bremssystems zu kompensieren. Dazu wird die Vorspanneinheit 7 derart ausgelegt, dass sich der Bremskraftverstärker 1 durch Aufbringen der Unterstützungskraft Fₛᵤₚ im Vorfeld eines zu erwartenden Bremswunsches oder unmittelbar nach Erkennen eines Bremswunsches exakt in eine Ausgangsposition bewegt, welcher einem konventionellen Bremskraftverstärker ohne unerwünschte Tod- oder Leerwege im Bremssystem entspricht.

Speziell ist es möglich, sofern während der Todwegkompensation des zweite Teilelement 42 des Eingangselements 2 zwischen dem Anschlag 12 und der Kraftübertragungseinheit 5 eingeklemmt bleibt, das heißt das zweite Teilelement 42 mit einer Druckkraft beaufschalgt wird, dass der Luftspalt 43 konstant bleibt.

Wie bereits erwähnt wird erfindungsgemäß eine Unterstützungskraft Fₛᵤₚ im Vorfeld eines zu erwartenden Bremswunsches oder unmittelbar nach Erkennen eines Bremswunsches in einem Zeitbereich vor oder unmittelbar nach Erkennen einer Betätigung des Eingangselements erzeugt. Der genaue Zeitpunkt kann dabei auf vielfältige Weise festgelegt werden. So können beispielsweise ein Loslassen eines Gaspedals oder ein Ansprechen eines Bremslichtschalters oder auch ein Erkennen eines Schleppmomentes als Indizien für eine in Kürze zu erwartende Betätigung des Eingangselements des Bremskraftverstärkers interpretiert werden und damit als Trigger zur sukzessiven Erhöhung der Unterstützungskraft Fₛᵤₚ dienen.

Alternativ zu der in Figur 4 dargstellten Ausführungsform kann das Eingangselement 2 auch beweglich in einem Rohr angeordnet sein, welches in Ruhelage des Bremskraftverstärkers 1 an der Kraftübertragungseinheit 5 anliegt und sich mit seiner der Kraftübertragungseinheit 5 abgewandten Seite an dem Anschlag 12 abstützt. In diesem Fall wird die Reaktionskraft über das Rohr in Zusammenwirkung mit dem Anschlag 12 erzeugt. Selbstverständlich kann sich die Kraftübertragungseinheit 5, also z.B. die Reaktionsscheibe 40, durch entsprechende konstruktive Auslegung des Bremskraftverstärkers 1 ohne Auswirkung auf die Anwendbarkeit der Erfindung auch unmittelbar an dem Anschlag 12 abstützen.

## Patentansprüche

1. Bremskraftverstärker (1) mit
- einem durch einen Fahrer betätigbaren Eingangselement (2),
- einem Aktuator zum Erzeugen einer Unterstützungskraft (Fₛᵤₚ),
- einem Ausgangselement (6), welches durch das Eingangselement (2) und/oder den Aktuator mit einer Eingangskraft (Fᵢₙ) bzw. der Unterstützungskraft (Fₛᵤₚ) beaufschlagbar ist und durch welches ein Kolben eines Hauptbremszylinders mit einer Betätigungskraft beaufschlagbar ist,
- einer Kraftübertragungseinheit (5) mit elastischen Eigenschaften, welche zwischen dem Eingangselement (2) und dem Aktuator einerseits und dem Ausgangselement (6) andererseits angeordnet ist und die Eingangskraft (Fᵢₙ) und/oder die Unterstützungskraft (Fₛᵤₚ) auf das Ausgangselement (6) überträgt,
**dadurch gekennzeichnet, dass**
- der Bremskraftverstärker (1) eine Vorspanneinheit (8) aufweist, welche derart auf die Kraftübertragungseinheit (5) einwirkt, dass sie die Kraftübertragungseinheit (5) im Ruhezustand des Bremskraftverstärkers (1) mit einem Kräftepaar beaufschlagt.

2. Bremskraftverstärker nach Anspruch 1, wobei der Aktuator als pneumatischer oder hydraulischer oder elektrohydraulischer oder elektromechanischer oder elektrothermischer Aktuator ausgestaltet ist.

3. Bremskraftverstärker nach einem der Ansprüche 1 oder 2, wobei die Kraftübertragungseinheit (5) derart ausgestaltet ist, dass eine Abweichung des Verhältnisses der Unterstützungskraft (Fₛᵤₚ) zur Eingangskraft (Fᵢₙ) von einem vorgegebenen Verhältnis zu einer Auslenkung der Kraftübertragungseinheit (5) führt.

4. Bremskraftverstärker nach Anspruch 3, wobei die Kraftübertragungseinheit (5) als eine elastisch deformierbare Reaktionsscheibe (40) oder eine elastische Federkonstruktion ausgebildet ist.

5. Bremskraftverstärker nach einem der Ansprüche 1 bis 4, wobei die Vorspanneinheit (8) eine Krafterzeugungseinheit (9) aufweist, welche die Kraftübertragungseinheit (5) im Ruhezustand aktiv mit einer ersten Kraft des Kräftepaares beaufschlagt.

6. Bremskraftverstärker nach Anspruch 5, wobei die Krafterzeugungseinheit (9) als ein im Ruhezustand des Bremskraftverstärkers (1) vorgespanntes Federelement ausgebildet ist, welches sich einseitig an der Kraftübertragungseinheit (5) abstützt.

7. Bremskraftverstärker nach Anspruch 6, wobei eine Rückholfeder (10) des Bremskraftverstärkers (1) als Federelement dient.

8. Bremskraftverstärker nach Anspruch 6, wobei eine Feder des Hauptbremszylinders als Federelement dient.

9. Bremskraftverstärker nach einem der Ansprüche 5 bis 8, wobei die Vorspanneinheit (8) eine Reaktionseinheit (11) umfasst, welche eine Reaktionskraft zu der ersten Kraft erzeugt, welche zusammen mit der ersten Kraft das Kräftepaar bildet.

10. Bremskraftverstärker nach Anspruch 9, wobei die Reaktionseinheit (11) einen Anschlag (12, 12') umfasst, an welchem sich die Kraftübertragungseinheit (5) unmittelbar oder mittelbar abstützt.

11. Bremskraftverstärker nach Anspruch 10, wobei das Eingangselement (2) ein durch den Fahrer betätigbares erstes Teilelement (41) zum Erzeugen der Eingangskraft (Fᵢₙ) und ein davon getrenntes zweites Teilelement (42) zur Übertragung der Eingangskraft (Fᵢₙ) auf die Kraftübertragungseinheit (5) aufweist und der Anschlag (12) derart angeordnet ist, dass sich in Ruhelage des Bremskraftverstärkers (1) das zweite Teilelement (42) des Eingangselements (2) mit seiner der Kraftübertragungseinheit (5) abgewandten Seite daran abstützt.

12. Bremskraftverstärker nach Anspruch 10, wobei das Eingangselement (2) beweglich in einem Rohr angeordnet ist, welches in Ruhelage des Bremskraftverstärkers (1) an der Kraftübertragungseinheit (5) anliegt und sich mit seiner der Kraftübertragungseinheit (5) abgewandten Seite an dem Anschlag (12) abstützt.

13. Bremskraftverstärker nach einem der vorhergehenden Ansprüche, wobei zwischen dem Eingangselement (2) und der Kraftübertragungseinheit (5) oder zwischen dem ersten (41) und zweiten Teilelement (42) des Eingangselements (2) ein Luftspalt (43) vorgesehen ist.

14. Bremskraftverstärker nach Anspruch 13, wobei der Luftspalt (43) im Ruhezustand kleiner oder größer ist als ein gewünschter Luftspalt zu Beginn eines Bremsvorganges.

## Claims

1. Brake booster (1) having
- an input element (2) which can be activated by a driver,
- an actuator for generating an assistance force (Fₛᵤₚ),
- an output element (6) to which an input force (Fᵢₙ) or the assistance force (Fₛᵤₚ) can be applied by the input element (2) and/or the actuator, and by means of which an activation force can be applied to a piston of a master brake cylinder,
- a force-transmitting unit (5) with elastic properties which is arranged between the input element (2) and the actuator, on the one hand, and the output element (6), on the other, and which transmits the input force (Fᵢₙ) and/or the assistance force (Fₛᵤₚ) to the output element (6),
**characterized in that**
- the brake booster (1) has a prestressing unit (8) which acts on the force-transmitting unit (5) in such a way that it applies a pair of forces to the force-transmitting unit (5) in the state of rest of the brake booster (1).

2. Brake booster according to Claim 1, wherein the actuator is configured as a pneumatic or hydraulic or electrohydraulic or electromechanical or electro thermal actuator.

3. Brake booster according to one of Claims 1 or 2, wherein the force-transmitting unit (5) is configured in such a way that a deviation of the ratio of the assistance force (Fₛᵤₚ) with respect to the input force (Fᵢₙ) from a predefined ratio leads to a deflection of the force-transmitting unit (5).

4. Brake booster according to Claim 3, wherein the force-transmitting unit (5) is embodied as an elastically deformable reaction plate (40) or an elastic spring structure.

5. Brake booster according to one of Claims 1 to 4, wherein the prestressing unit (8) has a force-generating unit (9) which actively applies a first force of the pair of forces to the force-transmitting unit (5) in the state of rest.

6. Brake booster according to Claim 5, wherein the force-generating unit (9) is embodied as a spring element which is prestressed in the state of rest of the brake booster (1) and is supported on one side on the force-transmitting unit (5).

7. Brake booster according to Claim 6, wherein a return spring (10) of the brake booster (1) serves as a spring element.

8. Brake booster according to Claim 6, wherein a spring of the master brake cylinder serves as a spring element.

9. Brake booster according to one of Claims 5 to 8, wherein the prestressing unit (8) comprises a reaction unit (11) which generates a reaction force to the first force and forms the pair of forces together with the first force.

10. Brake booster according to Claim 9, wherein the reaction unit (11) comprises a stop (12, 12') on which the force-transmitting unit (5) is supported directly or indirectly.

11. Brake booster according to Claim 10, wherein the input element (2) has a first component element (41) which can be actuated by the driver and has the purpose of generating the input force (Fᵢₙ), and a second component element (42) which is separate therefrom and has the purpose of transmitting the input force (Fᵢₙ) to the force-transmitting unit (5), and the stop (12) is arranged in such a way that in the position of rest of the brake booster (1) the second component element (42) of the input element (2) is supported with its side facing away from the force-transmitting unit (5).

12. Brake booster according to Claim 10, wherein the input element (2) is movably arranged in a pipe which, in the position of rest of the brake booster (1), bears against the force-transmitting unit (5) and is supported with its side facing away from the force-transmitting unit (5) on the stop (12).

13. Brake booster according to one of the preceding claims, wherein an air gap (43) is provided between the input element (2) and the force-transmitting unit (5) or between the first component element (41) and the second component element (42) of the input element (2).

14. Brake booster according to Claim 13, wherein the air gap (43) is smaller or larger in the state of rest than a desired gap at the start of a braking process.

## Revendications

1. Servofrein (1) comprenant
- un élément d'entrée (2) pouvant être actionné par un conducteur,
- un actionneur pour générer une force d'assistance (Fₛᵤₚ),
- un élément de sortie (6), lequel peut être sollicité au moyen de l'élément d'entrée (2) et/ou de l'actionneur avec une force d'entrée (Fᵢₙ) ou la force d'assistance (Fₛᵤₚ) et au moyen duquel un piston d'un maître-cylindre de frein peut être sollicité avec une force d'actionnement,
- une unité de transmission de force (5) présentant des propriétés élastiques, laquelle est disposée entre l'élément d'entrée (2) et l'actionneur d'une part et l'élément de sortie (6) d'autre part et transmet la force d'entrée (Fᵢₙ) et/ou la force d'assistance (Fₛᵤₚ) à l'élément de sortie (6),
**caractérisé en ce que**
- le servofrein (1) comprend une unité de précontrainte (8), laquelle agit sur l'unité de transmission de force (5) de telle sorte qu'elle sollicite l'unité de transmission de force (5) à l'état de repos du servofrein (1) avec un couple de forces.

2. Servofrein selon la revendication 1, dans lequel l'actionneur est configuré sous forme d'actionneur pneumatique ou hydraulique ou électrohydraulique ou électromécanique ou électrothermique.

3. Servofrein selon l'une quelconque des revendications 1 et 2, dans lequel l'unité de transmission de force (5) est configurée de telle sorte qu'un écart entre le rapport de la force d'assistance (Fₛᵤₚ) à la force d'entrée (Fᵢₙ) et un rapport prédéfini mène à une déviation de l'unité de transmission de force (5).

4. Servofrein selon la revendication 3, dans lequel l'unité de transmission de force (5) est réalisée sous la forme d'un disque de réaction (40) déformable élastiquement ou sous la forme d'une structure de ressort élastique.

5. Servofrein selon l'une quelconque des revendications 1 à 4, dans lequel l'unité de précontrainte (8) comprend une unité de génération de force (9), laquelle sollicite l'unité de transmission de force (5) à l'état de repos activement avec une première force du couple de forces.

6. Servofrein selon la revendication 5, dans lequel l'unité de génération de force (9) est réalisée sous la forme d'un élément de ressort précontraint à l'état de repos du servofrein (1), lequel élément de ressort s'appuie unilatéralement contre l'unité de transmission de force (5).

7. Servofrein selon la revendication 6, dans lequel un ressort de rappel (10) du servofrein (1) sert d'élément de ressort.

8. Servofrein selon la revendication 6, dans lequel un ressort du maître-cylindre de frein sert d'élément de ressort.

9. Servofrein selon l'une quelconque des revendications 5 à 8, dans lequel l'unité de précontrainte (8) comprend une unité de réaction (11), laquelle génère une force de réaction à la première force, laquelle force de réaction forme, conjointement avec la première force, le couple de forces.

10. Servofrein selon la revendication 9, dans lequel l'unité de réaction (11) comporte une butée (12, 12') contre laquelle l'unité de transmission de force (5) s'appuie directement ou indirectement.

11. Servofrein selon la revendication 10, dans lequel l'élément d'entrée (2) comprend un premier élément partiel (41) pouvant être actionné par le conducteur pour générer la force d'entrée (Fᵢₙ) et un deuxième élément partiel (42) séparé de celui-ci pour la transmission de la force d'entrée (Fᵢₙ) à l'unité de transmission de force (5), et la butée (12) est disposée de telle sorte que, dans la position de repos du servofrein (1), le deuxième élément partiel (42) de l'élément d'entrée (2) s'appuie sur celle-ci par son côté opposé à l'unité de transmission de force (5).

12. Servofrein selon la revendication 10, dans lequel l'élément d'entrée (2) est disposé de manière mobile dans un tube, lequel s'applique contre l'unité de transmission de force (5) dans la position de repos du servofrein (1) et s'appuie contre la butée (12) par son côté opposé à l'unité de transmission de force (5).

13. Servofrein selon l'une quelconque des revendications précédentes, dans lequel un espace d'air (43) est prévu entre l'élément d'entrée (2) et l'unité de transmission de force (5) ou entre le premier (41) et le deuxième élément partiel (42) de l'élément d'entrée (2).

14. Servofrein selon la revendication 13, dans lequel l'espace d'air (43) est, à l'état de repos, plus petit ou grand qu'un espace d'air souhaité au début d'une opération de freinage.
